(19) Europäisches Patentamt
European Patent Office
Office européen des brevets

(11) **EP 2 290 971 A2**

(12) **EUROPEAN PATENT APPLICATION**

(43) Date of publication:
**02.03.2011 Bulletin 2011/09**

(51) Int Cl.:
*H04N 7/16* (2011.01)   *H04N 7/173* (2011.01)
*H04H 60/64* (2008.01)   *H04H 60/66* (2008.01)
*H04H 60/31* (2008.01)

(21) Application number: **10011061.8**

(22) Date of filing: **08.06.2001**

(84) Designated Contracting States:
**AT BE CH CY DE DK ES FI FR GB GR IE IT LI LU MC NL PT SE TR**

(30) Priority: **09.06.2000 US 210468 P**

(62) Document number(s) of the earlier application(s) in accordance with Art. 76 EPC:
**01305034.9 / 1 162 840**

(71) Applicant: **Invidi Technologies Corporation Edmonton AB T5J 3S4 (CA)**

(72) Inventors:
• **Wilson, Daniel, C.**
  **Edmonton**
  **Alberta T5N 3K6 (CA)**

• **Boulet, Daniel, A.**
  **Sherwood Park**
  **Alberta T8A 0L7 (CA)**
• **Torrieri, Sandro, A.**
  **Edmonton**
  **Alberta T5X 4S7 (CA)**
• **Michaels, Dean, T.**
  **Edmonton**
  **Alberta T5J 3S4 (CA)**

(74) Representative: **Harris, Ian Richard et al
D Young & Co LLP
120 Holborn
London EC1N 2DY (GB)**

Remarks:
This application was filed on 28/09/10 as a divisional application to the application mentioned under INID code 62.

(54) **Delivering targeted assets to subscribers**

(57)   A method and apparatus for delivering targeted assets to subscribers using communication media, wherein each subscriber has a set top box, the method comprising the steps of generating a profile of each subscriber at the set top box associated with the respective subscriber, broadcasting an asset to all subscribers along with target information; and delivering the asset only to subscribers whose profiles match the target information. The delivery of the asset, and accumulated information from delivery of the asset to other subscribers, is reported to a user using an asset delivery notification, without identifying the subscriber to the user. A privacy manager is used to strip identification information from the asset delivery notification. The profile, which may include real time information, for example on whether the subscriber set is on and what it is tuned to, is generated by monitoring the viewing habits of the subscriber and storing the information at a set top box.

FIGURE 1

## Description

BACKGROUND OF THE INVENTION

01 This invention relates to a method of planning, purchasing, delivering and monitoring targeted advertising via television.

02 Targeted advertising campaigns are known to be more effective than non-targeted advertisements. It is thus desirable for an advertiser to acquire information on a customer that permits the advertiser to identify customers that might be more receptive to the advertisement from the advertiser. The kind of information that would assist in targeting customers includes personal information such as the kind of television shows the customer watches, geographic location of the customer and the gender, age and interests of the customer. Information about a prospective customer that might be useful to an advertiser in determining whether to send an advertisement to a customer is referred to in this patent document as a customer profile. On the other hand, customers wish their privacy and do not want advertisers to know their customer profiles. This problem is particularly acute for subscribers to interactive multimedia networks. In what follows, customers and prospective customers of advertisers are referred to as subscribers. The entities operating the multimedia networks are referred to as service providers.

SUMMARY OF THE INVENTION

03 This invention is directed towards solving the problem of targeted advertising on a multimedia network while ensuring subscriber privacy. In addition, the invention is scalable to multiple advertisers, subscribers and service providers.

04 According to an aspect of the invention, there is provided a method of delivering targeted assets to subscribers using communication media, wherein each subscriber has a set top box, the method comprising the steps of generating a profile of each subscriber at the set top box associated with the respective subscriber, broadcasting an asset to all subscribers along with target information; and delivering the asset only to subscribers whose profiles match the target information. The delivery of the asset, and accumulated information from delivery of the asset to other subscribers, is preferably reported to a user without identifying the subscriber to the user. For system checking purposes, there may be some users that are identified. A privacy manager is used to strip identification information from the asset delivery notification. The profile, which may include real time information, for example on whether the subscriber set is on and what it is tuned to, is generated by monitoring the viewing habits of the subscriber and storing the information at a set top box.

05 According to a further aspect of the invention, there is provided a communication system for delivery of advertisements to subscribers, the system comprising a communication network including an information manager and a source of advertisements, a set top box associated with each subscriber and each set top box being connected to the communication network, each set top box being configured to include a profiler containing profile information about the subscriber, each set top box being configured to include a targeter for receiving advertisement delivery requests containing constraints, for delivering an advertisement to the subscriber when the constraints match the profile information and for reporting delivery of an advertisement by generating an advertisement delivery notification, and a privacy manager interfacing between the set top box and the communication network, the privacy manager being configured to strip information identifying the subscriber from advertisement delivery notifications and forward information on the delivery of the advertisement to the information manager.

06 According to a further aspect of the invention, there is provided a method of delivering advertisements, the method comprising the steps of forwarding a quote request from a buyer to a service provider, wherein the quote request contains a set of one or more constraints on the subscribers to be shown the advertisement, generating a cost estimate for the quote based on audience size, wherein the audience size is controlled by the set of constraints, returning the cost estimate to the buyer; and sending the advertisement for delivery to the subscribers defined by the set of constraints.

07 The quote request may be provided to multiple service providers and the multiple service providers may each provide a response selected from the group consisting of a no quote response and a quote. Whether an advertisement is shown to a subscriber may be determined by profile information describing the subscriber. The determination of whether to show an advertisement to a subscriber may be carried out by a targeter at the subscriber premises. Advertisement delivery statistics may be generated and returned to the buyer, and are preferably anonymous with respect to the subscriber. Preferably, each subscriber is connected to a service provider through a privacy manager that strips subscriber identification information from advertisement delivery information generated at the subscriber premises.

08 According to a further aspect of the invention, there is provided a method of broadcasting messages in a network composed of plural geographically distinct communication nodes and plural subscriber set top boxes connected to some but not all of the communication nodes, the method comprising the steps of: generating a message containing fields identifying user specified communication nodes of the network, delivering the message to a first communication node in the network, forwarding the message from the first communication node in the network only to the user specified communication nodes, and forwarding the message from the user specified communication nodes to all subscriber set top boxes connected to the user specified communication nodes. The message preferably contains a set of one or more constraints, for example geographic constraints, and the method further comprises the steps of: broadcasting an advertisement to the plural subscriber set top boxes; and showing the advertisement only at subscriber set top boxes that have profiles that satisfy the set of constraints.

09 According to a further aspect of the invention, there is provided a method of delivering advertisements to subscribers to a network, the method comprising the steps of: broadcasting an advertisement to plural subscriber set top boxes in the network; and showing the advertisement only at subscriber set top boxes that have profiles that satisfy a set of constraints associated with the advertisement.

BRIEF DESCRIPTION OF THE DRAWINGS

10 There will now be described preferred embodiments of the invention, by way of illustration, with reference to the figures, in which like numerals denote like elements, and in which:

Fig. 1 is a schematic showing the main components of an embodiment of apparatus for carrying out the invention;
Fig. 1A is a schematic showing a distributed implementation of the invention;
Fig. 2 is a flow diagram illustrating the basic steps of a method according to the invention;
Fig. 2A is a flow diagram illustrating one of the method steps of Fig. 2;
Fig. 3 shows the structure of an asset delivery request (ADR);
Fig. 4 is a flow diagram illustrating the compilation of asset delivery statistics;
Fig. 5 shows the structure of an asset delivery statistic (ADS);
Fig. 6 is a flow diagram illustrating asset delivery decision making;
Fig. 6A is a flow diagram illustrating how the targeter uses constraints to decide when to deliver an asset;
Fig. 7 shows the structure of an asset delivery notification (ADN); and
Fig. 8 illustrates a quoting method for use with an implementation of the invention.

DETAILED DESCRIPTION OF PREFERRED EMBODIMENTS OF THE INVENTION

11 In this patent document, the word "comprising" is used in its non-limiting sense to mean that items following the word in the sentence are included and that items not specifically mentioned are not excluded. The use of the indefinite article "a" in the claims before an element means that one of the elements is specified, but does not specifically exclude others of the elements being present, unless the context clearly requires that there be one and only one of the elements.

12 All lines connecting system components in the drawings are conventional communication links. The communication links may be any of: conventional internal links within a conventional general purpose computer programmed in accordance with this patent description, a hardwired equivalent or conventional communication links between conventional general purpose computers programmed in accordance with this patent description, and may be hardwired, wireless or any type of internet link. In a preferred embodiment of the invention, communication between components use internet protocol. Since internet protocol is well understood, this patent description will not provide details of the communications in so far as they rely on well known techniques such as internet protocol.

Definitions of words used in this patent document.

13 Ad Campaign - a collection of PDRs which work together to present an overall message.
ADN (Asset Delivery Notification) - a message indicating that on a specific occasion and channel, a specific ADR has been delivered to a subscriber.
ADR (Asset Delivery Request) - a request to deliver an asset to a set of subscribers.
Asset - the media to be delivered to the subscriber (in colloquial terms, an asset is typically an advertisement).
ADRID (Asset Delivery Request Identifier) - a systemwide-unique identifier associated with each ADR.
ADS (Asset Delivery Statistic) - the anonymized and aggregated count of the number of subscribers which were shown a specified occasion of a specified ADR.
DSTB - digital set top box. Such a box need not be literally on a TV set, but is a device that could be anywhere in the subscriber's personal domain, including being embedded in a television set, and components of the device may be placed outside of the subscriber's premises.
Advertisement - a colloquial term roughly describing the media associated with an asset.
Audience size - the number of times that ADRs within a specified PDR will have or has had their asset(s) delivered based on the constraints associated with each ADR.
Constraint - targeting criteria used to select when and to whom an ADR's asset is delivered.
Communication manager (system component) - manages communication between system components. This device functions as a router, and is similar to routers used in the internet, except that instead of IP addresses being contained in messages, the messages contain address paths containing the names of the destinations of the messages, and the communication manager looks up the corresponding addresses in a database or directory, which typically will be stored in an information manager.
Asset Delivery - the act of the targeter requesting that a DSTB's operating system show an asset to the subscriber.

Geo-demographic segmentation - a system of categorizing or classifying small geographic regions based on the economic, social or demographic characteristics of the households within each region. The characteristics are derived from a wide variety of sources including census data, public opinion polls and purchasing pattern analysis.

Geo-demographic segment - one of the categories or classifications defined by a geo-demographic segmentation system.

Ad sales interface (system component) - the interface for receiving input from and communicating with advertisers.

Frequency - the maximum number of times that an ADR is to be delivered to its targeted audience from each DSTB.

Asset manager (system component) - the asset repository, which stores advertisements for delivery to subscribers. The asset manager may introduce the asset to the subscriber stream at various locations in the communication network, but preferably adds the asset at the DSTB under direction of the targeter.

Targeter (system component) - the targeter decides whether an advertisement should be played to a subscriber and tracks what advertisements are played and when.

Privacy manager (system component) - the privacy manager restricts the kind of information that can be fed back to a user.

Occasion - a single delivery of the asset associated with an ADR. Occasions are numbered starting at 1 for the first delivery of the asset on a particular DSTB and incrementing by one for each successive delivery. Since an ADN and the resulting ADS include the occasion number of the delivery, it is possible for an advertiser to ultimately determine how many subscribers saw the asset once, how many saw it twice and so on.

Organization - a business/corporate entity that interacts with the system. Examples include service providers, advertising agencies, media buyers, the operator of the system and regulators. Media buyers plan targeted advertising campaigns, put together the ADRs and PDRs and make the decision to actually purchase the resulting campaign. A service provider has the customers who will actually be shown the targeted advertisements. A cable network provides the programming stream within which the targeted advertisements appear. The operator of the system manages directory and access information.

PDR (Package Delivery Request) - a collection of possibly ordered ADRs which are managed as a unit by all system components (i.e. a PDR and its associated ADRs always travel together). Note that since a PDR is a collection of ADRs, a reference to a PDR within this document implicitly refers to the ADRs within the collection unless explicitly indicated otherwise.

Profile information - the information or data describing the household and/or the current audience. Profile information is developed by the profiler and used by the targeter.

Information manager (system component) - the information repository for reporting collections of information relating to the system and advertisers. For example, the information manager stores IP addresses of components in the system.

Real-time profiler - a profiler plug-in that develops profile information describing the current audience.

Real-time profile - the profile information developed by whichever real-time profiler plug-ins are currently configured within a profiler.

Service provider - a company in the business of delivering television to subscribers (in today's marketplace, these are either cable companies, telephone companies or satellite companies).

Profiler (system component) - a collection of plug-ins that compile information on subscribers. A household profile contains information like the household's geo-demographic segment and other descriptive information. The household profile does not tend to change very quickly.

Subscriber - the service provider's customer. An approximate synonym for audience.

Targeted audience - the audience implied by the constraints associated with an ADR.

User - individuals who interact directly with the system. Users are associated with organizations. Note that subscribers and their households are not considered to be users.

14 An advertiser or media buyer interacts with the system of the invention either directly via the Internet or indirectly by working with human intermediaries (i.e. sales representatives) who are themselves directly connected. In contrast, the relationship between the system of the invention and a service provider is much more intimate with system hardware located on the service provider's premises and system software running on the system hardware and on the digital set top boxes (DSTBs) located in their subscribers' homes.

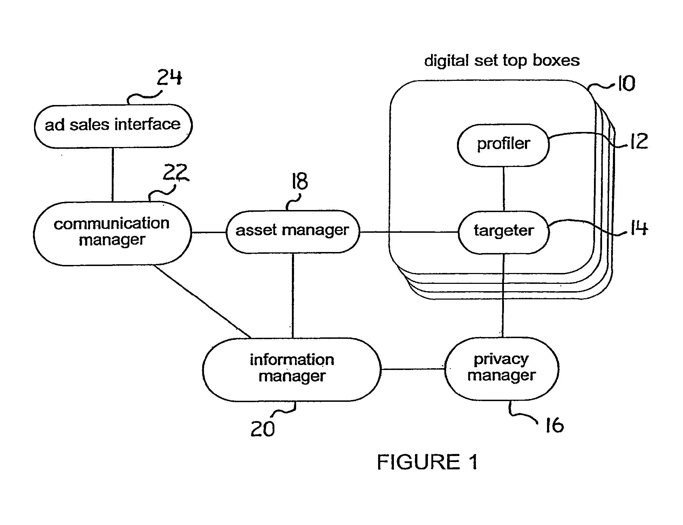

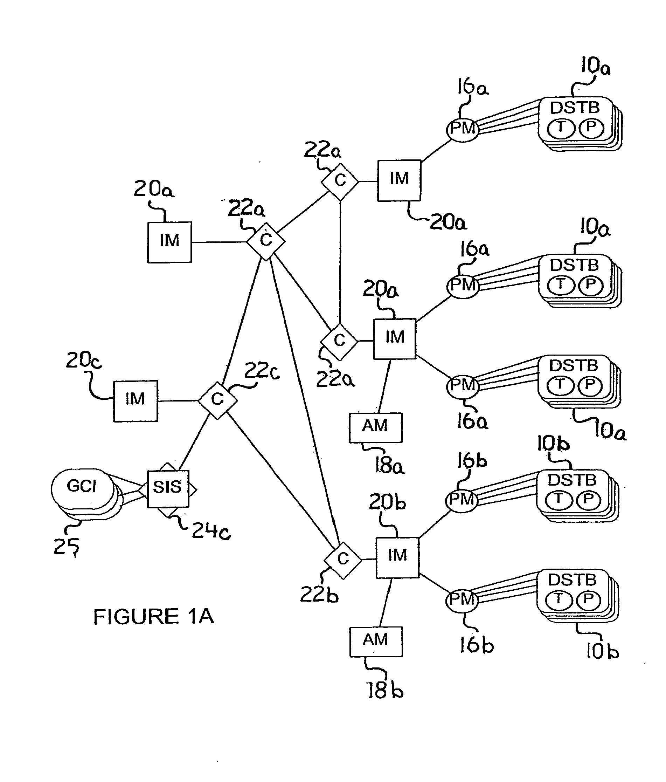

15 5 Fig. 1 shows the system architecture for an embodiment of the invention. Fig. 1 shows the basic functions of the components. An implementation showing different configurations of the components is shown in Fig. 1A. The DSTB 10 is at a subscriber's premises, and includes a connected profiler 12 and targeter 14. The DSTB 10 is a conventional device that contains software that enables the DSTB 10 to carry out the profiling and targeting functions described here. Consequently, the profiler 12 and targeter 14 are not necessarily divisible physical elements, but are embedded in the software used to run the DSTB 10. The software defining the profiler 12 and targeter 14 may be readily prepared from the description in this patent document. The components of the system architecture operate as individual instances in geographically distributed locations. The targeter 14 is connected by conventional communication links to a privacy manager 16 and may be connected to the asset manager 18 depending on the configuration of the system as implemented. The asset manager 18 may also be connected directly to the privacy manager 16. The communication links in Fig. 1 are represented by single lines and may be any conventional communication link. Both the privacy manager 16 and asset manager 18 are connected to an information manager 20. Both the asset manager 18 and information manager 20 are connected to a communication manager 22, which links to an ad sales interface 24. Each of the items shown outside of the DSTB 10 and ad sales interface 24 may be located at a service provider, and may be formed of software loaded into a conventional microprocessor with conventional input and output interfaces. Communication with advertisers occurs primarily through the ad sales interface 24. The ad sales interface 24 may be operated by the system operator, and need not be associated with any particular service provider.

16 Fig. 1A illustrates the working relationships between components of a system according to the invention with two service providers. Components associated with a first service provider are identified by the suffix "a". Components associated with a second service provider are identified by the suffix "b". Components with the suffix "c" are not associated with any particular service provider, but are operated by the system operator. As shown, a communication manager 22a may communicate with a single information manager 20a, which may communicate with one or more privacy managers 16a. A communication manager 22 and corresponding information manager 20 will typically be collocated, for example in a single facility or room, and may be in a single computer. The privacy managers 16a may each communicate with multiple DSTBs 10a according to their capacity for handling multiple DSTBs 10.

17 Fig. 1A also illustrates that an information manager 20a may communicate with an asset manager 18a, which may be the service provider's sole asset manager. An additional communication manager 22a may act as a secure interface between other communication managers 22 operated by the same service provider and the communication managers of other organizations. Each communication manager 22 has an information manager 20 associated with it to provide configuration information about the global network. A communication manager 22c may be in a location completely controlled by the operator of the system, and may be associated with an information manager 20c. The communication managers 22a, b, c are used by all other communication oriented system components to route and forward messages to other components in the system. Information relating to a specific organization is preferably kept at a specific information manager, and may be accessed through any communication manager in the system. The information manager 20 associated with a communication manager also provides directory services to the communication manager and any system component that communicates with the communication manager. The directory should indicate for each organization where that organization's information is located.

18 When a system component seeks to send a message to other system components, it sends a request for address information to the information manager 20 associated with the communication manager 22 with which the system component is communicating. Any of various directory systems may be used for storing address information.

19 Multiple GUI client interfaces 25, which may each be part of a web browser, are run on each respective media buyer's computer. A sales interface server 24c is also connected to the communication manager 22c and permits communication between the media buyer and the communication manager 22c. Media buyers use their sales interface to plan and purchase targeted advertising. Additional components may be added as desired. A single sales interface 24c for example, may be used, that communicates with all other communication managers 22,a,b globally, or there may be regional sales interfaces, eg. one in Europe, one in North America, and one or two in Asia. The client interface 25 preferably presents geographic constraint choices in a hierarchy that is consistent across all client interfaces 25.

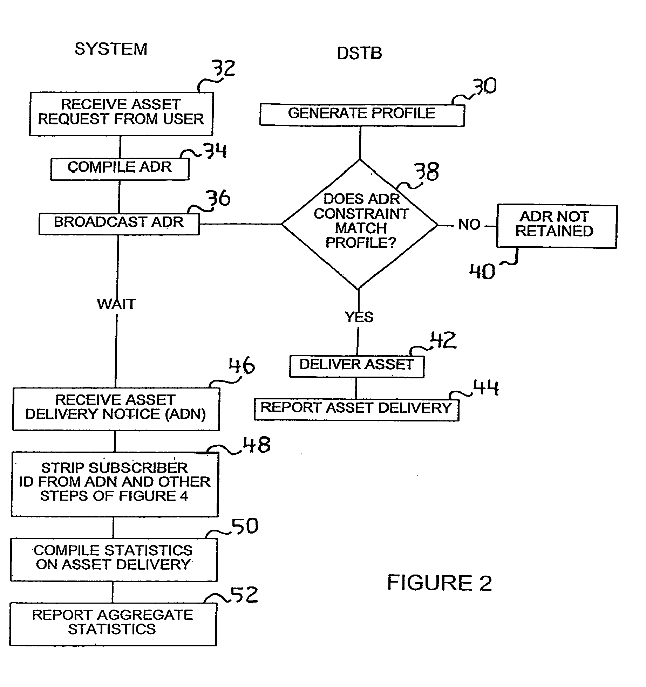

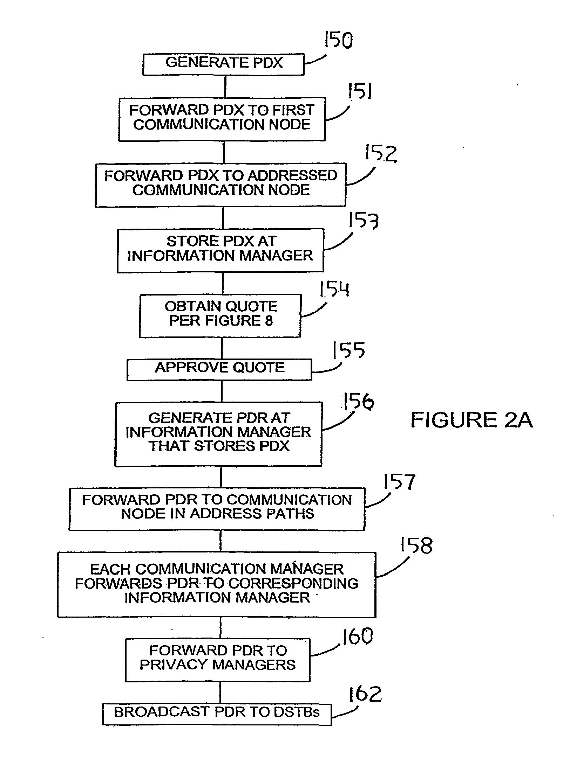

20 Each subscriber has a DSTB 10 that contains a profiler 12 and targeter 14. Referring to Figs. 2 and 2A, the basic method steps of an embodiment of the invention will now be described. The profiler 12 generates a profile of the subscriber (step 30) and stores it at the DSTB 10. The system, in response to a request by a user to broadcast an asset (step 32), compiles an ADR (step 34) and broadcasts it to all DSTBs (step 36).

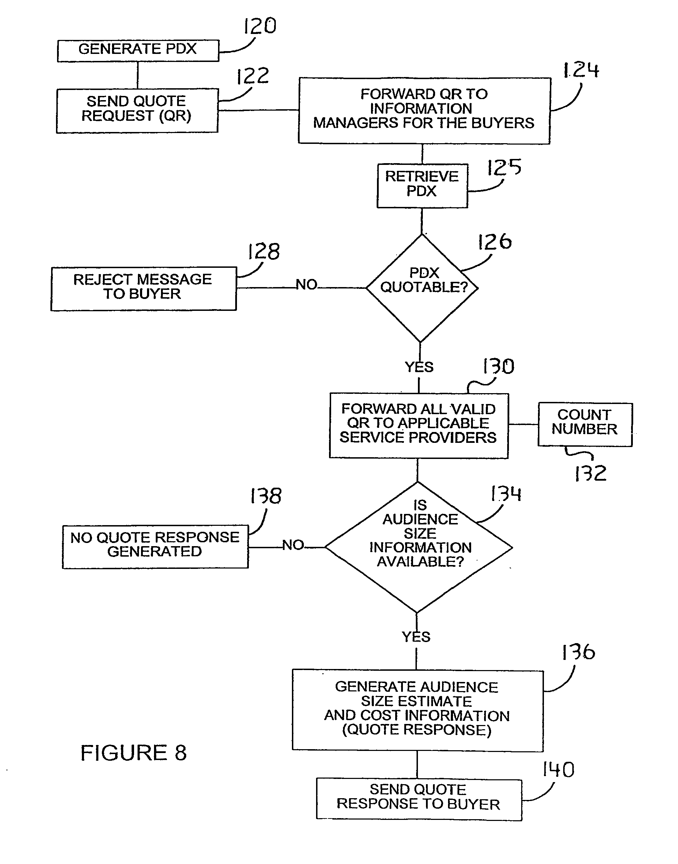

21 1 The manner in which an ADR is generated and broadcast is illustrated in Fig. 2A. The user, or media buyer, first creates an ad campaign that, using the contraint mechanism, specifies a target audience for the campaign. Using the ad sales interface 24, the media buyer creates a pseudo-PDR or PDX that contains a description of the buyer, a description of the advertiser, a list of service providers, specified by the user, to which the PDR is to be delivered and a number of ADRs (step 150) that define the ad campaign. Other information may be contained in the PDX that is not needed by the DSTB 10 such as information informing a computer what colour to use to display the request. The PDX is then routed through the communication system to the information manager 20 responsible for the user's organization. The PDX is routed by first sending it to the communication manager 22 responsible for communications with the ad sales interface 24, which in this case is communication manager 22c in Fig. 1A (step 151). The communication manager 22c obtains routing information from the information manager 20c for the user's organization. The addresses of the information managers 20 for all organizations are stored in the information manager 20c. At the communication manager 22c, the PDX is forwarded to the communication manager 22 associated with the addressed information manager (step 152) and the communication manager 22 then forwards the PDX to the addressed information manager. Once the PDX arrives at the information manager 20 it is stored (step 153). The user now obtains a quote for the stored PDX. The quote is obtained in the manner described below in reference to Fig. 8 (step 154). If the user determines the quote to be acceptable, a purchase approval message is sent from the ad sales interface 24 to the information manager 20 storing the PDX (step 155). At the information manager 20, a PDR is created from the PDX that contains a description of the buyer, a description of the advertiser, a number of ADRs, and a pair of address paths (step 156). One address path is a destination address path that contains a list of the IP addresses (and port number if required) for the information managers 22 of the service providers to which the buyer has specified that the PDR be sent. The PDR also contains a sender address path. As the PDR moves outward through the network, at each communication manager 22 at which the PDR arrives, the address of that communication manager is moved from the destination address path to the sender address path. At each node in the network, an acknowledge message can be readily generated and sent back along the path followed by the outward bound PDR. The PDR is also then forwarded by each communication manager 22 at which the PDR arrives to any communication manager 22 in the destination path (step 157). Penultimately, the PDR will arrive at the communication manager 22 associated with an information manager 20 responsible for a service provider in the destination address path. At each of these communication managers 22 the PDR is forwarded to the associated information manager 20 (step 158).

22 When a PDR arrives at an information manager 20 that is connected to one or more privacy managers 16, the information manager 20 checks the geographic constraints in the ADRs and forwards the PDR only to those privacy managers 16 that are specified by the ADRs (step 160). Each privacy manager 16 forwards the PDR to all DSTBs 10 to which the privacy manager 16 is connected (step 162).

23 Each DSTB 10 decides whether constraints associated with the ADRs in the PDR match the stored profile of the subscriber (step 38). If there is no match at a DSTB 10, the ADR is rejected, and when the asset is broadcast, the asset is not shown at that DSTB 10 (step 40). If there is a match, the ADR is stored at the DSTB 10. At a time after delivery of the ADR, but before the time the asset is to be shown, the asset is delivered (step 42) by broadcast to the DSTBs 10 in the same geographic area to which the ADRs were delivered. Only those DSTBs 10 that have stored the ADR corresponding to the asset then show the asset to the subscriber. The time when the asset is shown to the subscriber will depend on the constraints in the ADR. Thus, the asset may be stored pending showing until the constraints are met, as for example until a subscriber has turned the TV on and is watching a football game.

24 Upon showing of the asset, the DSTB 10 then reports the asset delivery (step 44) by sending an ADN. The system receives the ADN (step 46) at the privacy manager 16 and constructs aggregated delivery statistics (ADSs) that contain no information identifying the subscriber (step 48). The ADSs from all the privacy managers 16 in the system then are forwarded to the information manager 20, which compiles statistics on the delivery of the asset (step 50). The information manager 20 then reports aggregated statistics to the user (step 52).

25 The communication manager 22 preferably uses secure communication links. It is the responsibility of the relevant infrastructure provider(s) to ensure that the pathways are sufficiently secure. The secure function may be provided by conventional secure links.

26 If the communication manager 22 is unable to deliver a message then the communication manager 22 may, but is not required to, send an error indication back to the sender. When the communication manager 22 delivers a message to the target, the communication manager 22 also provides the target with the identity of the sender. The communication manager 22 may take conventional measures to ensure that the message was actually sent by the identified sender, that the message has not been modified while in transit, and that the message is actually targeted at the receiving component. The communication manager 22 does not need to guarantee that a message that is sent is actually delivered, two delivered messages are not actually duplicates of a single sent message, or two delivered messages from the same or different senders arrive in the same order in which they were sent by their respective senders.

27 A communication manager 22 assumes that its associated components are not subject to compromise. In contrast, a communication manager 22 assumes that remote communication managers 22 at other locations and their associated components are subject to compromise and takes appropriate conventional measures to reduce the impact of a remote compromise to an appropriate level.

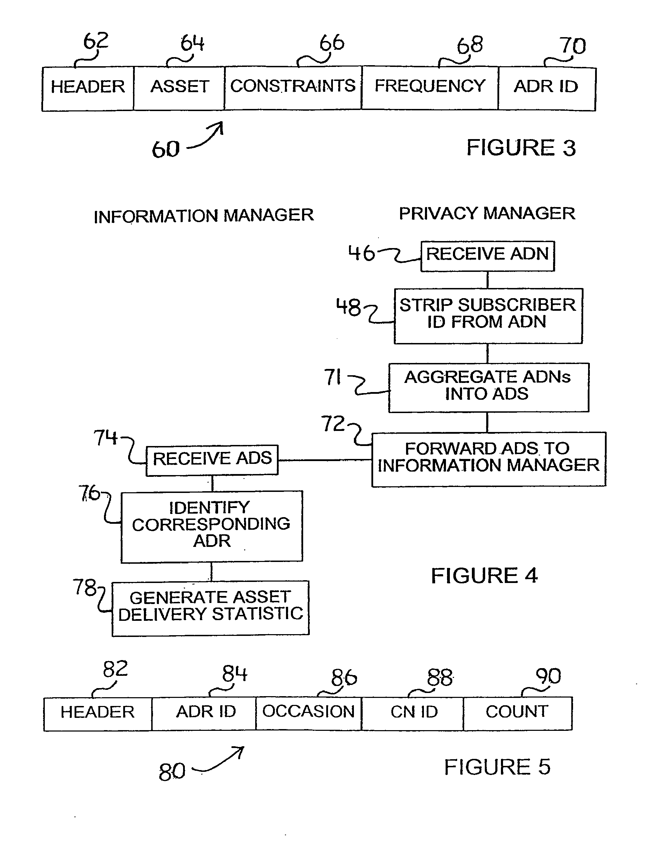

28 The ad sales interface 24 is used to plan, purchase and monitor ad campaigns. The tasks performed by the ad sales interface 24 are creation of new ad campaigns (specified by PDRs), specification of ADRs (i.e. constraints, frequencies and assets), placement of ADRs within PDRs, storing and retrieving PDRs from information manager, campaign planning (i.e. what-if analysis), purchasing of ad campaigns, and reviewing the results of ad campaigns. The ad sales interface 24 must ensure that an ADR is not sold which will be distributed to DSTBs which do not support the constraints specified by the ADR. The structure of an ADR is shown in Fig. 3. The ADR is an electronic message 60 containing fields, including a suitable header 62, a field 64 that specifies the asset to be delivered to the subscribers, a field or fields 66 that specify the constraints describing when and to which subscribers the asset is to be delivered to, a field 68 that specifies the frequency (i.e. number of occasions that the asset is to be delivered to the subscriber) and the ADR's ADRID 70. The field 64 has the form of an internet protocol URL (universal resource locator) that specifies the asset to be delivered.

29 The information manager 20 acts primarily as a data repository containing: system configuration information, information describing the organizations that interact with the system (e.g. system operator, advertising agencies, advertisers, media buyers and service providers), user information (lists of users within each organization including who they are, what duties they perform and what privileges they have), billing information, costing and pricing information, auditing information, ad campaign information (i.e. stored PDRs and the ADSs associated with their ADRs), geographic information (i.e. how the system views the division of the world into regions), and for each privacy manager 16's collection of DSTBs, information describing: the geographic area covered by the DSTBs 10, the media formats supported by the DSTBs 10, and the constraints supported by the DSTBs. This particular category of information describes the DSTBs associated with each privacy manager 16 as a collection (i.e. no information describing a particular DSTB is stored within information manager 20). The information manager 20 stores geographic information on service providers and system components in any suitable manner. Geographic location may be defined for example using postal codes, zip codes or the equivalent postal address.

30 The information manager 20 is also responsible for scheduling the distribution and actually distributing the PDRs to the privacy manager 16 for distribution to the DSTBs. The information manager 20 rejects an attempt to distribute or purchase a PDR which contains ADRs whose constraints are not supported by the DSTBs within the geographic area targeted by the ADRs. The information manager 20 responds to queries as to whether the DSTBs within a particular geographic area support a specified set of constraints. The information manager 20 provides audience size predictions and pricing quotes for PDRs created by the ad sales interface 24. The information manager 20 performs coarse geographic targeting operations on PDRs (e.g. ensuring that a PDR targeted at an Alberta audience is not sent to privacy managers 16 that are located in Ontario). The information manager 20 provides an administrative interface (i.e. GUI and/or command line) which can be used to administer the system.

31 Every communication manager 22 has a single information manager 20 associated with it and every information manager 20 is associated with a single communication manager 22. The information manager 20 provides the communication manager 22 with system configuration information. Each organization has associated with it a single information manager 20 that is the primary authority for information related to that organization. Organizations may also have one or more information managers 20 acting as secondary authorities for the organization. An information manager 20 that is authoritative for an organization provides the following services: a variety of information about the organization, storage for PDRs created by users associated with the organization, authentication and authorization services for users associated with the organization, in the case of a service provider organization, storage of PDRs distributed to DSTBs 10 within the organization, audience size projection and pricing information used by the ad sales interface 24 when performing what-if analysis or quoting a PDR which contains ADRs that target subscribers associated with the service provider. A secondary information manager 20 for an organization may or may not allow updates to the service provider related data (i.e. secondary authoritative information managers 20 are allowed to be read-only).

32 Referring to Fig. 4, after a privacy manager 16 receives an ADN and strips DSTB ID information, the privacy manager 16 aggregates like ADNs into ADSs (step 71) and forwards an ADS to the information manager 20 (step 72). When an ADS arrives from the privacy manager 16 (step 74), the information manager 20 associates it with the ADR containing the ADRID, occasion number and cable network ID from the ADS (step 76). If there is already an ADS associated with the ADR then the count from the newly arrived ADS is added to the count in the existing ADS and the newly arrived ADS is discarded (step 78). The information manager 20 should be careful to ensure that if duplicate ADSs arrive then the count value within the duplicates is only accounted for once.

33 The privacy manager 16 is distributed as multiple instances operating in service provider sites (typically relatively close in network terms to the service provider's head-end or central office locations). The privacy manager 16 is responsible for ensuring that no information associated with an individual subscriber is leaked out to the rest of the system, distributing PDRs to the targeters 14 on the individual DSTBs 10, distributing small assets (e.g. banner ads) to the DSTBs 10) depending on the configuration, distributing large assets (e.g. MPEGs) to the DSTBs 10, and aggregating ADNs into ADSs.

34 There is at least one privacy manager 16 associated with each service provider that is responsible for interfacing with the service provider's DSTB. Large service providers may require multiple privacy managers 16 depending on their network structure, size of their subscriber base and geographic considerations. Privacy managers 16 should not be shared between service providers. The DSTBs associated with a particular privacy manager 16 are said to be within the privacy manager's domain.

35 Depending on the configuration, the privacy manager 16 may need to maintain a list of the DSTBs within its domain in order to facilitate distribution of PDRs to the DSTBs. The privacy manager 16 is the only system component outside of the DSTBs 10 with any knowledge of individual subscribers and their DSTBs. If the information manager 20 sends a PDR to a privacy manager 16 then the privacy manager 16 is expected to distribute it to all the DSTBs 10 that it is responsible for.

36 When distributing assets to the DSTBs 10, the privacy manager 16 must ensure that each DSTB receives the asset's media in a format that it can deliver to the subscriber. An ADN is sent by the targeter 14 to the privacy manager 16 whenever an ADR's asset is delivered. The privacy manager 16 uses ADS objects to maintain counts of recently arrived ADNs with identical ADRID, cable network IDs and occasion number combinations.

37 Referring to Fig. 5, each ADS 80 contains a suitable header 82 followed by fields for the following information: an ADRID field 84, an occasion number 86, a Cable Network identifier 88, and a count 90 of the number of recently arrived ADNs with the same ADRID, occasion number values and cable network ID. The privacy manager 16 attempts to detect duplicate ADNs arriving from the same targeter instance 14. Duplicate ADNs are discarded (i.e. not counted).

38 On an as-needed, periodic basis (roughly every fifteen minutes if practical), the privacy manager 16 forwards its collection of ADSs to the information manager 20 and then discards them. The privacy manager 16 only communicates with the asset manager 18, information manager 20 and the DSTBs 10. That is, the privacy manager 16 is not communication manager-aware.

39 The privacy manager 16 is permitted to assume that the communication pathways between it and the asset manager 18 and the information manager 20 are secure. The privacy manager 16 should not assume that the communication pathway(s) between it and the DSTBs 10 are secure. The protocol used to communicate between the privacy manager 16 and targeter 14 should be sufficiently secure and robust to provide an appropriate level of assurance that traffic is not being intercepted or tampered with and be respectful of the privacy of the subscriber. Conventional methods may be used to achieve this. Specifically, the privacy manager 16 should never take notice of whether a particular targeter 14 has accepted or rejected a PDR in whole or in part. To the extent that the privacy manager 16 may be able to deduce whether a particular targeter 14 has accepted or rejected a PDR in whole or in part, the privacy manager 16 should be programmed not to. In addition, the privacy manager 16 should not retain information on persistent media (other than operating system paging space) which could be used to determine if a targeter 14 has accepted or rejected a PDR. The privacy manager 16 may only broadcast information to its DSTBs (i.e. it should not provide information to some DSTBs which is not provided to other DSTBs). The protocol may allow a privacy manager 16 to detect missed ADNs and to request that a particular DSTB provide it with missing ADNs. The protocol may allow a targeter 14 to detect missed PDRs and to request that Privacy manager provide it with missing PDRs.

40 An exception to the broadcast rule is that the privacy manager 16 may retransmit requested PDRs and the privacy manager 16 may divide DSTBs 10 into classes based on their ability to deliver different media formats and then provide the different DSTB classes with asset media in a format appropriate to the DSTB class.

41 The asset manager 18 may either manage the assets directly or provide proxy services to a third party asset manager. From the system perspective, asset management includes providing information about asset characteristics (duration, format, availability) and distributing or arranging for the distribution of assets to the DSTBs. The services/information that the asset manager 18 provides are: asset media information including: providing unique identifiers for each asset, any access restrictions relating to advertisers, media buyers and/or service providers; media format availability information (i.e. what format(s) the asset is available in); any special asset media requirements (e.g. whether or not the asset requires the ability for the user to interact with the asset); depending on the configuration, distribution of the asset media to appropriate privacy managers 16 (either directly when the relevant asset manager 18 and privacy manager 16 are co-located and via communication manager 22 and information manager 20 otherwise); and, depending on the configuration, distribution of the asset media directly to the targeters 14 on the DSTBs.

42 Any distribution of asset media to a privacy manager 16 and/or targeter 14 occurs when a request message is received from the information manager 20. The information manager 20 is responsible for scheduling and requesting the distribution of asset media. The request message to the asset manager 18 is generated by an information manager 20 only after an ADR referring to the asset has been broadcast through the network. The asset is broadcast along with the same asset identifier that was used in the ADR corresponding to the asset. As noted above, a variety of methods may be used to broadcast the asset since decisions about whether to show the asset are made at the DSTBs 10.

43 The profiler 12 exists entirely within the DSTB 10 and is responsible for managing profiles within the DSTB 10. The profiler 12 manages household profiles and real-time profiles. The profiler 12 may attempt to distinguish between individual members or groups of members of the subscriber's household. Information on the members of the household may be collected by the profiler 12 and then used by real time profilers to predict which members or groups of members are actually viewing the television in real time.

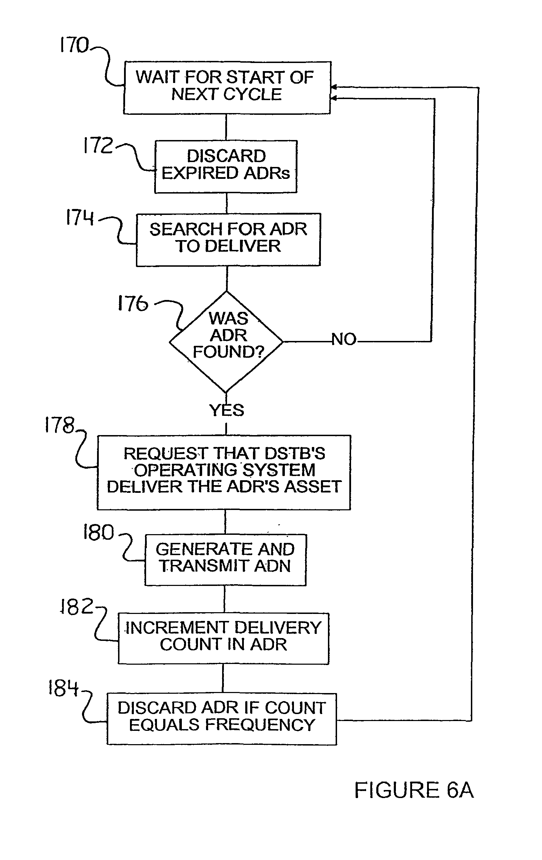

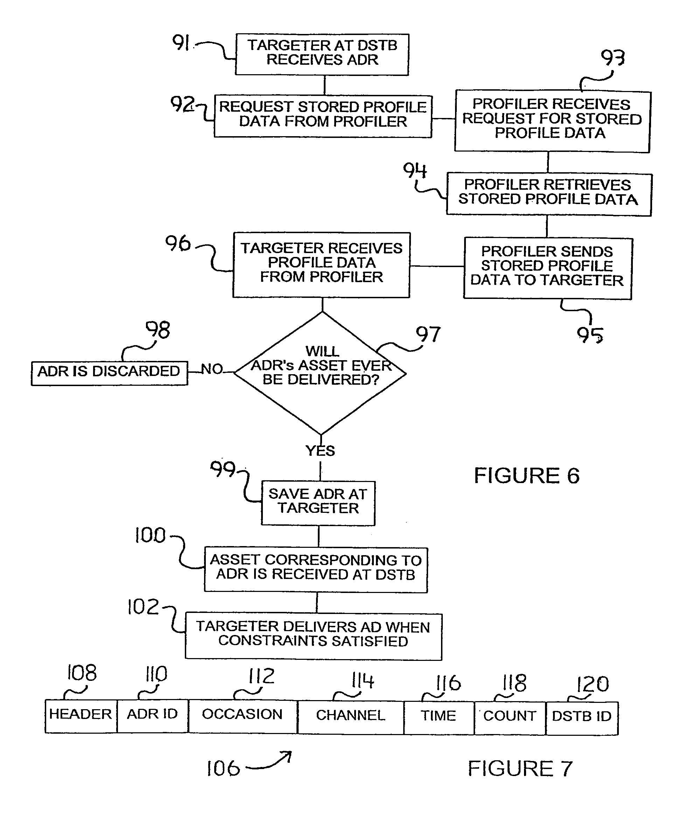

44 The profiler 12 uses profiler plug-ins to generate the data required to satisfy ADR constraints. The targeter 14 is responsible for actually delivering the assets within ADRs subject to the ADR's constraints. The targeter 14 uses the household profile(s) within the DSTB 10 to decide whether to silently accept or reject each individual ADR within a PDR received by it from the privacy manager 16. Referring to Fig. 6, upon receipt of an ADR (step 91), the targeter 14 sends a request (step 92) to the profiler 12 for information on the stored profiles within the profiler 12. The profiler 12 receives the request (step 93), retrieves the stored profile(s) (step 94) and forwards the stored profile information to the targeter (steps 95, 96). The targeter 14 determines if there is any likelihood that the ADR's asset will be delivered to the subscriber (step 97). This determination is performed by selecting all constraints from the ADR which refer to profile data which will likely remain static for long periods of time (i.e. household profile data) and applying these selected constraints to the household profile data. Constraints which refer to real-time profile data are ignored during this determination. If the determination indicates that the ADR's asset will definitely not be delivered by the DSTB 10 then the targeter 14 discards the ADR (step 98). Otherwise, the targeter 14 saves the ADR (step 99). Later, after the ADR's asset has been received by the DSTB 10 (step 100), the targeter 14 uses the ADR's constraints which refer to real-time profile data to determine when to deliver the ADR's asset (step 102).

45 A constraint is said to be satisfied if the parameters of the constraint are currently true. For example, a time constraint is satisfied if the DSTB's clock is within the time range or ranges specified by the time constraint and a gender constraint is satisfied if the audience gender specified by the constraint (for example an audience containing females) matches the profile data describing the current audience (for example an audience of mixed males and females or an audience of females). At any given point in time, the targeter 14 has zero or more ADRs which it has saved for future delivery. On a periodic basis (preferably about once a minute in order to ensure prompt satisfaction of time constraints), the targeter 14 discards expired ADRs and searches for an ADR which can be delivered.

46 Refering to Fig. 6A, this process works as follows. The targeter waits for the start of the next cycle (step 170). The targeter 14 then checks any time constraints within each saved ADR to determine if any of the ADRs have expired because the DSTBs clock has advanced to the point where the ADR can never be delivered again. Expired ADRs are discarded (step 172). The targeter 14 then searches for an ADR whose asset is currently stored on the DSTB and whose constraints are all currently satisfied (step 174). If none are found (step 176) then the targeter 14 resumes waiting for the start of the next cycle (back to step 170). Otherwise, the targeter 14 requests that the DSTB's operating system deliver the ADR's asset (step 178). The targeter 14 then creates an asset delivery notification and sends it to the privacy manager 16 (step 180). The targeter 14 then increments the count within the ADR of the number of times that it has been delivered (step 182). If the count within the ADR is equal to the requested frequency for the ADR, the ADR is discarded (step 172). The targeter 14 then resumes waiting for the start of the next cycle (step 170).

47 For example, the profiler 12 might monitor the extent to which, say, football programs are watched by the subscriber. If more than, say, one hour, is spent watching football by the subscriber, the profiler 12 might save in its memory an indication that the viewer is male. If the targeter 14 has received an ADR with a constraint that an asset is intended for men, as identified by a constraint in the ADR, then the targeter 14 would deliver the asset if the profiler 12 returned an indication that the subscriber was male. If there was a woman in the subscriber's household, who watched, say, cooking shows, the profiler 12 may also keep a real time track of what program is being watched, and assess for any time period whether the viewer then watching television was male or female. Upon receiving and storing an ADR and the corresponding asset, the targeter 14 can query the viewer status at the profiler 12, and if the viewer was likely to be male, deliver the asset.

48 An example of a profiler plug-in for gender determination will now be described. The gender plug-in (GP) predicts, in real-time, the gender(s) of the person(s) watching a particular TV set. The GP monitors the TV programs being watched. The GP has a table of gender breakdown for TV programs. The GP uses these two pieces of information to make its prediction. The output of the GP is two real numbers F and M. Both of these numbers are in the range of [0.0, 1.0]. The M value is the likelihood that a Male is currently watching the TV. A value of 0.0 denotes that it is highly unlikely that there is a Male present, a value of 1.0 corresponds to a high probability of a Male audience member. 0.5 is an indication that the GP has no opinion. The F value is similarly derived for a Female audience. A gender constraint in an ADR may then be based on whether the F and M values at the profiler 12 are greater or less than a given value.

49 From time to time (typically weekly) a table of GP data is loaded into the GP from Head Office. This table, called the GP Program Data (GPPD), lists TV programs, categories and genres. Each entry in the table provides an audience composition value. The audience composition, C, is the fraction of all TV viewers for the given program (or category or genre) that is female. Male audience size is 1 - C. These values are determined from TV rating data. A value of 0.5 indicates an even split between male and female viewers (and 1.0 is all female and 0.0 is all male). At regular intervals (e.g. every 5 minutes), the GP determines the program that is on TV, it also determines a category and a genre for the program. The category and genre information is derived from an Electronic Program Guide (EPG) that is present in the Digital Set Top Box (DSTB). The GP first attempts to lookup the program in the GPPD, if it cannot find the program, then it attempts to lookup the program category, if it cannot find the category, it attempts to lookup the genre. This lookup will result in an audience composition value C'. Finally GP updates its values for M and F (M' and F') based on the previous values of M, F, C' and k. k is a decay constant that is based on sampling period. The update is performed according to the equations:

$$F' = (k*F) + (1-k)*C'$$

$$M' = (k*M) + (1-k)*(1-C')$$

50 Profilers use various combinations of information to generate their predictions at different time scales. A profiler that identifies the household's geodemographic segmentation operates with a very long time scale. A profiler that determines if there is currently a viewer present operates on a time scale measured in units of a few tens of minutes. A gender profiler may produce a long term prediction of the makeup of the viewing household in addition to generating a more realtime prediction of the makeup of the people currently viewing the TV set. Such a profiler may be implemented as two separate profilers with the realtime gender profiler using the information generated by the long term gender profiler. Alternatively, such a profiler may exist as a single entity which provides both time scales of gender predictions. Profilers may use various information to generate profiles, including present show viewed and gender make-up of show audiences. Information on the show viewed may come from EPG (electronic program guide) data used to provide the viewer with programming information or from EPG data that the system operator downloads on a broadcast basis. A geodemographic profiler may operate by mapping the set top box's postal code or zip code to the household's geodemographic segment using postal/zip code to segment mapping tables downloaded by the system operator on a broadcast basis. The set top box's postal code or zip code may be either programmed into the box when it is setup or otherwise made available to the system operator. A profiler plug-in may also use information about the household makeup that is stored in the DSTB.

51 The ADRs that are purchased by the media buyer(s) and that eventually arrive on the set top boxes specify the target audience that the ADR's media is to be presented to. This targeting is done by associating zero or more targeting constraints with each ADR. A targeting constraint specifies to whom and under what conditions an ADR's media is to be presented. Targeting constraints correspond to profile information, but not necessarily with a one-to-one relationship, since a single targeting constraint may use more than one profile. A "show this to a Spanish audience" constraint may use, for example, a relatively static or long-term "the languages that are spoken in this household" profile to decide which set top boxes should retain the ADR for future delivery and use a realtime "the language of the current TV show" profiler to decide when to actually deliver the ad. Alternatively, a single profile may determine various attributes of the current program (language, genre, MPAA rating) and the resulting conclusions may be used in a variety of constraints (language constraints, genre constraints, rating constraints, age constraints). Some constraints may not use profilers at all. For example, the time constraint (for example, "show this ad between 2000 and 2200") doesn't use a profile but rather just obtains the current time from the DSTB as required.

52 Examples of constraints are:

AdultsOnlyConstraint: restricts the advertisement to when there is not likely to be a child present.

CategoryConstraint: restricts the advertisement to a list of categories of shows or indicates that the advertisement should avoid a list of categories of shows. Categories include Science Fiction, News, Sports, etc.

CompetitorConstraint: can be used to ensure that the advertisement is not shown in the same hour as a targeted advertisement belonging to a competitor.

FrequencyConstraint (mandatory): Indicates how often the ad should be played. Frequency may be specified in a separate field, or within the constraints in an ADR.

GenderConstraint: restricts the ad to particular genders (eg. "show this to an audience which is likely to contain female viewers" or "show this to an audience which is unlikely to contain female viewers", etc). There are two parameters with three possible values per parameter: - avoid, targeted or don't care about females - avoid, targeted or don't care about males. "avoid" means try to avoid showing ad when that gender is likely to be present. "target" means try to show ad when that gender is likely to be present. These yield various possibilities arising from the combinations of the two parameters.

GeographicConstraint (mandatory): restrict the ad to a particular geographic area.

ServiceProviderConstraint: restrict the ad to a particular service provider.

PacingConstraint: allows the advertiser to control the rate at which occasions of the ad are shown.

LanguageConstaint: restricts the ad to be shown when a program in a specific language is shown.

GeoDemographicConstraint: restricts the ad to one or more geodemographic segments, which may be defined by existing geodemographic models such as PSYTE, Prism or census data.

ProgramConstraint: restricts the ad to be delivered in one of a list of programs or prevents the ad from being delivered in any of a list of programs. This allows advertisers to target particular programs or to avoid programs that they don't want to be associated with.

TimeConstraint: restricts the ad to being delivered within a list of time ranges.

FamilyConstraint: restricts the ad to being delivered to households that probably have children (or probably don't have children).

CategoryWatcherConstraint: restricts the ad to being delivered to households that are known to watch particular categories of shows (or who don't watch particular categories).

ProgramWatcherConstraint: restricts the ad to being delivered to households that are known to watch particular shows (or known to not watch particular shows). This is analogous to the CategoryWatcherConstraint.

LifespanConstraint: an ADR should not last forever. It should expire after some period.

53 The targeter 14 preferably uses targeting plug-ins to satisfy ADR constraints. When the targeter 14 delivers an ADR's asset, it sends an ADN to the privacy manager 16. As shown in Fig. 7, an ADN 106 preferably contains, besides a header 108, preferably exactly the following information (i.e. no more and no less): (1) a 64-bit ADRID 110 specifying which ADR's asset's media has been delivered, (2) a 16-bit occasion number 112 indicating which occasion of the ADR this ADN represents, (3) a channel 114 and time 116 that the ADR was delivered on, (4) a 16-bit serial number 118 which is incremented by one for each new ADN sent to the privacy manager 16 and (5) a maximum 64-bit identifier 120 which uniquely identifies the DSTB.

54 The privacy manager 16 may use the 16-bit serial number and the 64-bit DSTB identifier to determine if a newly received ADN is a duplicate of an ADN previously sent by the DSTB or if any ADNs have been missed. The privacy manager 16 uses the channel and time fields to derive which Cable Network the ADR was delivered on. The privacy manager 16 may request that a DSTB 10 re-transmit any ADNs which have been missed. The targeter 14 can indicate to the privacy manager 16 that the requested ADN has been irretrievably lost.

55 The privacy manager 16 separates the DSTB identifier from the other fields as soon as it has been determined whether the ADN is a duplicate or not. The privacy manager 16 should not be programmed to reassociate an ADRID (with or without the occasion number) with the DSTB-identifier that it came from once the DSTB identifier has been stripped off. In addition, the privacy manager 16 should not allow the association between the ADRID (with or without the occasion number) and the DSTB-identifier to be stored on persistent media.

56 Constraints are used by advertisers and media buyers to specify the conditions under which an ADR is to be delivered. The constraint-specification plug-ins within the ad sales interface 24, the household and real-time profiling plug-ins within the profiler 12 and the targeting plug-ins within the targeter 14 must be coordinated to ensure that an ADR's constraints are correctly implemented.

57 Each system component is responsible for providing its own local task scheduling facility. Components do not provide asynchronous event notification services to other components and components do not use polling as a substitute for asynchronous notification.

In practical terms, task scheduling is limited to (1) the information manager 20 scheduling the distribution of ADRs to the privacy manager 16, (2) the privacy manager 16 determining when the asset manager 18 should distribute assets to the DSTBs and (3) the targeter 14 scheduling asset delivery.

58 In order to develop, test and audit a system configuration according to the invention, it will be necessary to be able to have expanded access to the DSTB-resident information for some subscribers. This requirement is satisfied by the system concept of "run naked" mode. A subscriber who elects to "run naked" informs their service provider. The service provider informs the information manager 20 which configures the relevant targeter 14 instance to "run naked" and the relevant privacy manager 16 instance to accept the "run naked" mode information.

59 There are two levels of "run naked" mode and a subscriber may elect to run at either or both levels. In the "partially clothed" mode, the DSTB 10 provides profile information to the privacy manager 16 which is used to provide auditing capabilities. Data collected in "partially clothed" mode must be protected to ensure that information which could identify the particular subscriber is not made available to third parties or system components beyond the information manager 20 and the privacy manager 16.

60 In the "bare naked" mode, the DSTB 10 provides a wide range of information and may even run special software not normally loaded into the DSTB 10. This information is made available to system developers. The subscriber should assume that they can and probably will be identified by the system developer and possibly other third parties via the information. Note that a subscriber running "bare naked" need not also run "partially clothed" (i.e. the two modes are separate and distinct). The system operator will need to develop policies which control and describe access to "bare naked" and "partially clothed" information according to the needs of the subscribers.

61 Preferably, each user is associated with a particular organization, and all information relating to a particular organization is tagged to identify the organization to which the information relates. Security policies may therefore be implemented at an organization level, so that, for example, a user associated with one organization may not access information related to another organization. Each organization's information is managed and maintained by a particular information manager 20. Data packets created for an organization are stored by and accessed from the information manager 20 responsible for the organization that wishes the data packet created. More than one organization may be managed by a particular information manager 20. Each organization is supported and managed as a distinct entity. This includes provision of separate information repositories so that information for two different organizations supported by the same information manager 20 are managed separately. Information targeted for a particular organization is thus sent to the information manager 20 responsible for that organization.

62 A media buyer uses a sales interface to plan a targeted ad delivery request. To obtain a quote, referring to Fig. 1A and Fig. 8, a buyer saves information about the PDX on its computer using the sales interface client 25 (step 120), and sends a quote request message to its sales interface server 24 (step 122). The sales interface server 24 forwards the request to the information manager 20 responsible for the buyer (step 124). The quote request designates the PDX that is to be quoted. The information manager 20 retrieves the specified PDX (step 125) and verifies that the PDX contains sufficient information to be quoted (step 126). If the PDX is incomplete, a request rejected message is sent back to the sales interface client 25 (step 128). If the request is complete, a further quote request message is sent to each service provider whose geographic coverage area includes at least part of the geographic area targeted by the request (step 130). The media buyer may limit the request to a specific set of service providers regardless of the geographic area targeted by the request although the request is still not sent to service providers outside of the targeted geographic area. The count of the number of service providers who were sent the quote request message is saved with the PDX in a database in the information manager 20 (step 132). The quote request message sent by the information manager 20 to the various service providers includes a copy of the PDX representing the targeted ad delivery request.

63 The information manager 20 for each service provider checks the quote request and its database to determine whether information to generate a quote is available (step 134). If the information is available, an estimate of the number of times that the request's media will be shown if the request is actually purchased is generated (step 136). The estimate may also be generated at a number of information managers 20 that share the ADR geographic targeting constraint, if more than one has relevant information not duplicated elsewhere at the service provider, and the estimates returned to the service provider's primary information manager 20 and summed. If no quote is available from stored or accessible information, or if the media buyer is blacklisted (due for example to bad debts), a no quote response is generated and returned (step 138).

64 Quotes depend on predicted audience size. Audience size is predicted at the information managers by plug-ins from historical data for similar ADRs. If any information manager for a particular service provider to which the quote request is sent returns a no quote available message, then the buyer is provided with a no quote available message. Partial quotes may be made available to be media buyers. Any information manager 20 that sends a quote request message expects a response within a reasonable amount of time. If the response for the quote request takes longer, the response is assumed to be no response. Since a human awaits the response, a reasonable time may be a few seconds. The message returned to the buyer by a service provider contains either a no quote available report, or an estimate of the audience size and price (step 140). Each service provider's response is kept separate from the responses from other service providers to provide a cost breakdown per service provider. The buyer may then purchase the PDX, try again with different data or try to negotiate a price.

65 When a PDX is purchased by the buyer, a PDR is created for the PDX at the buyer's information manager 20 and the PDR is sent to the targeted service providers' information managers 20. Each targeted service provider's public accessible information manager 20 stores the request, and delivers it to other information managers 20, if any, associated with the same service provider. Irrelevant geographic constraint data may be deleted as the PDR is delivered to various geographic regions. When the PDR is due to be delivered, it is sent to the appropriate privacy manager 16, and then forwarded to the corresponding DSTBs 10. Each DSTB 10 that gets the request inspects it to see if there is any hope of delivering the request on the DSTB 10. This decision is based on the results of profilers with a long enough time horizon that their predictions will remain valid for the entire time span of the request (eg. geo-demographic information). Each DSTB 10 either saves the request for future delivery or discards it, without disclosing whether it did so to the privacy manager 16. Upon receipt at a DSTB 10, any remaining geographic constraint data may be discarded. At an appropriate time shortly before the start of the time span of the request, information managers 20 connected to the privacy managers 16 request the asset managers 18 to deliver assets to the DSTBs 10. As the asset(s) arrive on each DSTB 10, they are either discarded or saved depending on whether they correspond to previously saved PDRs or not. Again, neither the privacy manager 16 or the asset manager 18 is told whether the asset is saved or discarded. When the asset is delivered by a DSTB 10, it sends an ADN to its privacy manager 18. The ADN indicates which ADR was delivered, which delivery occurrence it was and what channel it was delivered on. The privacy managers 16 aggregate like ADNs into ADSs and forward the ADSs to their information managers 20 from time to time (soon enough that reasonably prompt results are available to the media buyer but not so often that excessive effort and/or bandwidth is expended on the task). The information managers 20 aggregrate like ADSs and forward them onwards towards the buyer responsible for the ADR (again, soon enough to provide reasonably prompt results but not so often as to waste effort and/or bandwidth). As the ADSs arrive on the media buyer's information manager 20, they are aggregated and stored with the original ad delivery request. The buyer can request to see any already stored ADSs as appropriate.

66 An asset manager organization for each asset manager 18 may also be used by the information managers for messaging. Transmission of assets from the asset managers 18 may be sent via information manager organization-oriented messages to the appropriate privacy managers 16 and then out to the DSTBs 10, via other service provider equipment for forwarding to DSTBs 10 (without using privacy managers 16). When multiple communication managers 22 are used, a secure messaging protocol may be used for communication between communication managers 22. An asset manager 18 typically forwards an ad to a targeter 14 at a DSTB 10 to be inserted in a programming stream by the targeter 14. The asset manager 18 may also forward the asset to other locations, including the cable network head end, or intermediate locations, for addition into the programming stream under direction of the targeter 14.

67 Aspects of the subject matter described herein are set out in the following numbered clauses:

1. A method of delivering targeted assets to subscribers using communication media, wherein each subscriber has a set top box, the method comprising the steps of:

generating a profile of each subscriber at the set top box associated with the respective subscriber;
broadcasting an asset to all subscribers along with target information; and
delivering the asset only to subscribers whose profiles match the target information.

2. The method of clause 1 further comprising the step of reporting to a user the delivery of the asset.

3. The method of clause 2 in which reporting to a user the delivery of the asset does not identify the subscriber to which the asset was delivered.

4. The method of clause 2 in which reporting to a user the delivery of the asset identifies a group of subscribers and does not identify a different group of subscribers.

5. The method of clause 2, 3 or 4 in which reporting the delivery of the asset comprises the steps of, for each subscriber:

forwarding an asset delivery notification from the set top box to a privacy manager, in which the asset delivery notification contains information on the identity of the subscriber; and
forwarding information from the asset delivery notification to an information manager after removing the information on the identity of the subscriber.

6. The method of clause 5 further comprising the step of compiling information on asset delivery from plural subscribers.

7. The method of clause 6 further comprising the step of delivering compiled information on asset delivery to a user.

8. The method of any one of the preceding clauses in which generating the profile of each subscriber comprises, for each subscriber, monitoring the viewing habits of the subscriber.

9. The method of clause 8 further comprising the step of storing an indication of a characteristic of the subscriber that is derived from the viewing habits of the subscriber.

10. The method of any one of the preceding clauses in which the profile of each subscriber includes stored and real-time information identifying a real-time viewer.

11. A communication system for delivery of advertisements to subscribers, the system comprising:

a communication network including an information manager and a source of advertisements;
a set top box associated with each subscriber and each set top box being connected to the communication network;
each set top box being configured to include a profiler containing profile information about the subscriber;
each set top box being configured to include a targeter for receiving advertisement delivery requests containing constraints, for delivering an advertisement to the subscriber when the constraints match the profile information and for reporting delivery of an advertisement by generating an advertisement delivery notification; and
a privacy manager interfacing between the set top box and the communication network, the privacy manager being configured to strip information identifying the subscriber from advertisement delivery notifications and forward information on the delivery of the advertisement to the information manager.

12. A method of delivering advertisements, the method comprising the steps of:

forwarding a quote request from a buyer to a service provider, wherein the quote request contains a set of one or more constraints on the subscribers to be shown the advertisement;
generating a cost estimate for the quote based on audience size, wherein the audience size is controlled by the set of constraints;
returning the cost estimate to the buyer; and
sending the advertisement for delivery to the subscribers defined by the set of constraints.

13. The method of clause 12 in which the quote request is provided to multiple service providers and the multiple service providers each provide a response selected from the group consisting of a no quote response and a quote.

14. The method of clause 12 or 13 in which whether an advertisement is shown to a subscriber is determined by profile information describing the subscriber.

15. The method of clause 14 in which the determination of whether to show an advertisement to a subscriber is carried out by a targeter at the subscriber premises.

16. The method of any one of clauses 12-15 in which advertisement delivery statistics are generated and returned to the buyer.

17. The method of clause 16 in which the advertisement delivery statistics returned to the buyer are anonymous with respect to the subscriber.

18. The method of clause 17 in which each subscriber is connected to a service provider through a privacy manager that strips subscriber identification information from advertisement delivery information generated at the subscriber premises.

19. A method of broadcasting messages in a network composed of plural geographically distinct communication nodes and plural subscriber set top boxes connected to some but not all of the communication nodes, the method comprising the steps of:

   generating a message containing fields identifying user specified communication nodes of the network;
   delivering the message to a first communication node in the network;
   forwarding the message from the first communication node in the network only to the user specified communication nodes; and
   forwarding the message from the user specified communication nodes to all subscribers set top boxes connected to the user specified communication nodes.

20. The method of clause 19 in which the message contains a set of one or more constraints and further comprising the steps of:

   broadcasting an advertisement to the plural subscriber set top boxes; and
   showing the advertisement only at subscriber premises at which the subscriber set top boxes have profiles that satisfy the set of constraints.

21. The method of clause 20 in which delivery of the message is constrained by geographic constraints.

22. A method of delivering advertisements to subscribers to a network, the subscribers having subscriber sets, the method comprising the steps of:

   broadcasting an advertisement to plural subscriber sets in the network; and
   showing the advertisement only at subscriber sets that have corresponding profiles that satisfy a set of constraints associated with the advertisement.

23. A method for use in delivering targeted assets to subscribers at subscriber devices, the method comprising a first system component:

   in response to an asset delivery request associated with targeting constraints that define a targeted audience for an asset, wherein the asset is for delivery by subscriber devices having subscriber profiles that match the targeting constraints, and based on the targeting constraints, sending the asset delivery request to a respective system component of each of multiple targeted service providers responsible for delivering assets to subscribers; and
   following delivery of the asset has been delivered by a subscriber device, receiving asset delivery statistics from a system component of each of the targeted service providers.

24. The method of clause 23, wherein said asset delivery request is associated with a geographic constraint used to determine the targeted service providers.

25. The method of clause 23 or Clam 24, further comprising the step of aggregating the asset delivery statistics from the multiple targeted service providers.

26. The method of any one of the clauses 23 to 25, wherein the asset delivery statistics are derived from asset delivery notifications sent by subscriber devices to report delivery of the asset.

27. The method of clause 26, wherein the asset delivery notification includes at least one of an identifier associated with an asset delivery request, an indication of a channel on which said asset was delivered by the subscriber device.

28. The method of any one of clauses 23 to 27, comprising the steps of at least one system component of a first service provider:

   receiving, from the first system component, a quote request containing a set of one or more constraints that define a target audience for an asset, wherein the asset is for delivery by subscriber devices having subscriber profiles that match the targeting constraints;
   estimating an audience size for the asset based on the targeting constraints;
   generating a cost estimate for the quote based on the audience size; and
   returning a quote response including the cost estimate to the first system component.

29. A method for use in delivering targeted assets to subscribers at subscriber devices, the method comprising the steps of at least one system component of a first service provider:

receiving, from a first system component, a quote request associated with a set of one or more constraints that define a target audience for an asset, wherein the asset is for delivery by subscriber devices having subscriber profiles that match the targeting constraints;

estimating an audience size for the asset based on the targeting constraints;

generating a cost estimate for the quote based on the audience size; and

returning a quote response including the cost estimate to the first system component.

30. The method of clause 28 or clause 29, wherein the step of estimating an audience size comprises predicting an audience size based on historical data from similar asset delivery requests.

31. The method of any one of clauses 28 to 30, wherein the at least one system component of the service provider is operable to return a no-quote response where information to prepare a response is not available.

32. The method of any one of clauses 28 to 31, wherein the quote request is associated with a geographic constraint.

33. The method of clause 32, wherein at least one system component is provided for each of a plurality of service providers and wherein the geographic constraint identifies which of the plurality of service providers is to receive the quote request.

34. The method of clause 33, wherein a system component that receives the quote request is operable to provide a response selected from the group consisting of a no quote response and a quote.

35. The method of any one of clauses 28 to 34, wherein the first system component is a sales interface server.

36. The method of any one of the clauses 28 to 35, wherein the at least one system component of a service provider is an information manager of a service provider.

37. A system for use in delivering targeted assets to subscribers at subscriber devices, the system comprising a first system component operable:

in response to an asset delivery request associated with targeting constraints that define a targeted audience for an asset, wherein the asset is for delivery by subscriber devices having subscriber profiles that match the targeting constraints, and based on the targeting constraints, to send the asset delivery request to a respective system component of each of multiple targeted service providers responsible for delivering assets to subscribers; and

following delivery of the asset has been delivered by a subscriber device, to receive asset delivery statistics from a system component of each of the targeted service providers.

38. The system of clause 37, wherein said asset delivery request is associated with a geographic constraint used to determine the targeted service providers.

39. The system of clause 37 or Clause 38, further comprising the step of aggregating the asset delivery statistics from the multiple targeted service providers.

40. The system of any one of clauses 37 to 39, wherein the asset delivery statistics are derived from asset delivery notifications sent by subscriber devices to report delivery of the asset.

41. The system of clause 40, wherein the asset delivery notification includes at least one of an identifier associated with an asset delivery request, an indication of a channel on which said asset was delivered by the subscriber device.

42. The system of any one of clauses 37 to 41 comprising the steps of at least one system component of a first service provider:

receiving, from the first system component, a quote request containing a set of one or more constraints that define a target audience for an asset, wherein the asset is for delivery by subscriber devices having subscriber profiles that match the targeting constraints;

estimating an audience size for the asset based on the targeting constraints;

generating a cost estimate for the quote based on the audience size; and

returning a quote response including the cost estimate to the first system component.

43. A system for use in delivering targeted assets to subscribers at subscriber devices, the system comprising the steps of at least one system component of a first service provider:

receiving, from a first system component, a quote request associated with a set of one or more constraints that define a target audience for an asset, wherein the asset is for delivery by subscriber devices having subscriber profiles that match the targeting constraints;

estimating an audience size for the asset based on the targeting constraints;

generating a cost estimate for the quote based on the audience size; and

returning a quote response including the cost estimate to the first system component.

44. The system of clause 42 or clause 43, wherein the step of estimating an audience size comprises predicting an audience size based on historical data from similar asset delivery requests.

45. The system of any one of clauses 42 to 44, wherein the at least one system component of the service provider is operable to return a no-quote response where information to prepare a response is not available.

46. The system of any one of clauses 42 to 45, wherein the quote request is associated with a geographic constraint.

47. The system of clause 46, wherein at least one system component is provided for each of a plurality of service providers and wherein the geographic constraint identifies which of the plurality of service providers is to receive the quote request.

48. The system of clause 47, wherein a system component that receives the quote request is operable to provide a response selected from the group consisting of a no quote response and a quote.

49. The system of any one of clauses 37 to 48, wherein the first system component is a sales interface server.

50. The system of any one of clauses 37 to 49, wherein the at least one system component of a service provider is an information manager of a service provider.

68 Immaterial modifications may be made to the invention described here without departing from the essence of the invention.

**Claims**

1. A method for use in delivering targeted assets to subscribers at subscriber devices, the method comprising a first system component:

   in response to an asset delivery request associated with targeting constraints that define a targeted audience for an asset, wherein the asset is for delivery by subscriber devices having subscriber profiles that match the targeting constraints, and based on the targeting constraints, sending the asset delivery request to a respective system component of each of multiple targeted service providers responsible for delivering assets to subscribers; and
   following delivery of the asset has been delivered by a subscriber device, receiving asset delivery statistics from a system component of each of the targeted service providers.

2. The method of Claim 1, wherein said asset delivery request is associated with a geographic constraint used to determine the targeted service providers.

3. The method of Claim 1 or Claim 2, further comprising the step of aggregating the asset delivery statistics from the multiple targeted service providers.

4. The method of any one of the preceding claims, wherein the asset delivery statistics are derived from asset delivery notifications sent by subscriber devices to report delivery of the asset.

5. The method of Claim 4, wherein the asset delivery notification includes at least one of an identifier associated with an asset delivery request, an indication of a channel on which said asset was delivered by the subscriber device.

6. The method of any one of the preceding claims comprising the steps of at least one system component of a first service provider:

   receiving, from the first system component, a quote request containing a set of one or more constraints that define a target audience for an asset, wherein the asset is for delivery by subscriber devices having subscriber profiles that match the targeting constraints;
   estimating an audience size for the asset based on the targeting constraints;
   generating a cost estimate for the quote based on the audience size; and
   returning a quote response including the cost estimate to the first system component.

7. A method for use in delivering targeted assets to subscribers at subscriber devices, the method comprising the steps of at least one system component of a first service provider:

   receiving, from a first system component, a quote request associated with a set of one or more constraints that define a target audience for an asset, wherein the asset is for delivery by subscriber devices having subscriber profiles that match the targeting constraints;
   estimating an audience size for the asset based on the targeting constraints;
   generating a cost estimate for the quote based on the audience size; and
   returning a quote response including the cost estimate to the first system component.

8. The method of Claim 6 or Claim 7, wherein the step of estimating an audience size comprises predicting an audience size based on historical data from similar asset delivery requests.

9. The method of any one of Claims 6 to 8, wherein the at least one system component of the service provider is operable to return a no-quote response where information to prepare a response is not available.

10. The method of any one of Claims 6 to 9, wherein the quote request is associated with a geographic constraint.

11. The method of Claim 10, wherein at least one system component is provided for each of a plurality of service providers and wherein the geographic constraint identifies which of the plurality of service providers is to receive the quote request.

12. The method of Claim 11, wherein a system component that receives the quote request is operable to provide a response selected from the group consisting of a no quote response and a quote.

13. The method of any one of the preceding claims, wherein the first system component is a sales interface server.

14. The method of any one of the preceding claims, wherein the at least one system component of a service provider is an information manager of a service provider.

15. A system comprising means for carrying out the method of any one of the preceding claims.

digital set top boxes

*24*

ad sales interface

*22*

communication manager

*18*

asset manager

*10*

profiler

*12*

targeter

*14*

information manager

*20*

privacy manager

*16*

FIGURE 1

FIGURE 1A

SYSTEM                          DSTB

RECEIVE ASSET
REQUEST FROM USER    *32*        GENERATE PROFILE    *30*

COMPILE ADR    *34*

BROADCAST ADR    *36*            DOES ADR
                                CONSTRAINT    *38*
                                MATCH            ──NO──    ADR NOT
                                PROFILE?                   RETAINED    *40*

WAIT                            YES

                                DELIVER ASSET    *42*

RECEIVE ASSET
DELIVERY NOTICE (ADN)    *46*    REPORT ASSET DELIVERY    *44*

STRIP SUBSCRIBER
ID FROM ADN AND OTHER    *48*
STEPS OF FIGURE 4

COMPILE STATISTICS
ON ASSET DELIVERY    *50*

REPORT AGGREGATE    *52*         FIGURE 2
STATISTICS

FIGURE 2A

| HEADER | ASSET | CONSTRAINTS | FREQUENCY | ADR ID |
|--------|-------|-------------|-----------|--------|

60

FIGURE 3

INFORMATION MANAGER

PRIVACY MANAGER

46 — RECEIVE ADN

48 — STRIP SUBSCRIBER ID FROM ADN

71 — AGGREGATE ADNs INTO ADS

72 — FORWARD ADS TO INFORMATION MANAGER

74 — RECEIVE ADS

76 — IDENTIFY CORRESPONDING ADR

78 — GENERATE ASSET DELIVERY STATISTIC

FIGURE 4

| HEADER | ADR ID | OCCASION | CN ID | COUNT |
|--------|--------|----------|-------|-------|

80

FIGURE 5

170 — WAIT FOR START OF
NEXT CYCLE

172 — DISCARD
EXPIRED ADRs

174 — SEARCH FOR ADR
TO DELIVER

176 — WAS
ADR
FOUND? — NO

YES

178 — REQUEST THAT DSTB'S
OPERATING SYSTEM
DELIVER THE ADR'S ASSET

180 — GENERATE AND
TRANSMIT ADN

182 — INCREMENT DELIVERY
COUNT IN ADR

184 — DISCARD ADR IF COUNT
EQUALS FREQUENCY

FIGURE 6A

91 — TARGETER AT DSTB RECEIVES ADR

92 — REQUEST STORED PROFILE DATA FROM PROFILER

93 — PROFILER RECEIVES REQUEST FOR STORED PROFILE DATA

94 — PROFILER RETRIEVES STORED PROFILE DATA

96 — TARGETER RECEIVES PROFILE DATA FROM PROFILER

PROFILER SENDS STORED PROFILE DATA TO TARGETER — 95

98 — ADR IS DISCARDED

NO

97 — WILL ADR's ASSET EVER BE DELIVERED?

YES

99 — SAVE ADR AT TARGETER

100 — ASSET CORRESPONDING TO ADR IS RECEIVED AT DSTB

102 — TARGETER DELIVERS AD WHEN CONSTRAINTS SATISFIED

FIGURE 6

| HEADER | ADR ID | OCCASION | CHANNEL | TIME | COUNT | DSTB ID |
|--------|--------|----------|---------|------|-------|---------|
| 108 | 110 | 112 | 114 | 116 | 118 | 120 |

106

FIGURE 7

GENERATE PDX — 120

SEND QUOTE REQUEST (QR) — 122

FORWARD QR TO INFORMATION MANAGERS FOR THE BUYERS — 124

RETRIEVE PDX — 125

PDX QUOTABLE? — 126

REJECT MESSAGE TO BUYER — 128

NO

YES

FORWARD ALL VALID QR TO APPLICABLE SERVICE PROVIDERS — 130

COUNT NUMBER — 132

IS AUDIENCE SIZE INFORMATION AVAILABLE? — 134

NO QUOTE RESPONSE GENERATED — 138

NO

YES

GENERATE AUDIENCE SIZE ESTIMATE AND COST INFORMATION (QUOTE RESPONSE) — 136

FIGURE 8

SEND QUOTE RESPONSE TO BUYER — 140